# EUROPÄISCHE PATENTANMELDUNG

(11) **EP 0 846 545 A1**
(43) Veröffentlichungstag der Anmeldung: **10.06.1998**
(21) Anmeldenummer: 97120706.3
(22) Anmeldetag: 26.11.1997
(51) Int. Cl.: B29C 49/42, B29C 49/06

(54) **Vorformlingsladestation für Blasmaschinen**

(30) Priorität: 06.12.1996 DE 19650626
(71) Anmelder: BEKUM Maschinenfabriken GmbH, D-12107 Berlin (DE)
(72) Erfinder: Gittner, Franz, 29594 Soltendieck (DE); Roos, Uwe-Volker, 29389 Bodenteich (DE)
(74) Vertreter: Flosdorff, Jürgen, Dr.

(57) **Zusammenfassung**

Die Erfindung betrifft eine Vorformlingsladestation für Reheat-Blasmaschinen. Bei solchen Maschinen besteht ein Problem darin, daß die auf Vorrat hergestellten hülsen- oder patronenförmigen kalten Vorformlinge (1), ehe sie durch eine Heizstrecke (10) auf den Transportdornen (12), einer Transporteinrichtung bewegt werden, die sie auf die richtige Blastempertur bringt, von der Anlieferungsposition "Boden unten" in die Aufsteckposition "Boden oben" gebracht werden müssen. Dies geschieht mittels eines die Vorformlinge (1) um 180° drehenden Wenderades (7), das sie an ein Laderad (15) übergibt, von dem sie auf die Transportdorne (12) gedrückt werden. Dies wird erfindungsgemäß dadurch bewerkstelligt, daß die Ladestation ein kontinuierlich drehendes Wenderad (7) mit waagerechter Achse (13) und ein die Vorformlinge von diesem abnehmendes, taktweise drehendes Laderad (15) mit senkrechter Achse (14) aufweisen, aus dem die Vorformlinge auf die Transportdorne (12) durch ein Aufdrücksystem (16) aufgesteckt werden, wobei das Aufstecken in einer Stillstandsphase der Transporteinrichtung der Reheat-Maschine bei gleichzeitigem Stillstand des Laderades (15) erfolgt.

## Beschreibung

Für die Herstellung von Hohlkörpern aus Kunststoff nach dem sogenannten Blasverfahren, bei dem ein Vorformling in eine Blasform mit einer die Größe und Gestalt des fertigen Hohlkörpers bestimmenden Formmulde oder -kavität eingebracht und in der geschlossenen Form durch Einführung eines Druckmediums in den Vorformling aufgeblasen, d.h. mit seiner Außenwand gegen die Wand der Kavität gedrückt und damit ausgeformt wird, unterscheidet man drei Hauptverfahrensgruppen, nämlich das Extrusionsblasverfahren, das Spritz-Blasverfahren und das Reheat-Verfahren.

Die Erfindung befaßt sich im weiteren Sinne mit dem Reheat-Verfahren, bei dem patronen- oder hülsenförmige Vorformlinge auf Vorrat gespritzt, im erkalteten Zustand dem Vorrat entnommen und um ihre Achse rotierend durch eine Heizstrecke geführt werden, in der sie in meist mehreren, von Zwischenkühlabschnitten unterbrochenen Heizabschnitten auf die richtige Blastemperatur wieder erwärmt werden, um nach dem Verlassen der Heizstrecke in eine übliche Blasform eingeführt zu werden.

Im engeren Sinne richtet sich die Erfindung auf eine Vorformlingsladestation für Reheat-Blasmaschinen. In diesen werden die Vorformlinge auf einer Transporteinrichtung, meist Kette, durch die Heiz- und Zwischenkühlstationen geführt. Hierzu werden die Vorformlinge auf auf den Ketten angebrachte Transportdorne mit der Mündung nach unten gesteckt, um die zugeführte Wärme, die generell nach oben steigt, vom kühl zu haltenden, häufig mit einem Gewinde versehenen Hals- oder Mündungsbereich zu schützen.

Das Aufstecken der Vorformlinge auf ihre Transport- oder Haltedorne muß sehr genau erfolgen, da sie auf den Dornen für eine gleichmäßige Erwärmung in der Heizstrecke taumelfrei rotieren müssen, bei nicht genau senkrecht stehenden Vorformlingen bei der Einführung in eine Blasform zu Ausschuß führende Schwierigkeiten auftreten können und beim Aufdrücken auf die Transportdorne zu Undichtigkeiten beim Verschließen des fertigen ausgeblasenen Hohlkörpers führende Verdrückungen vermieden werden müssen.

Wenn bei einer Reheat-Anlage die Blasform nicht am Ende einer Heizstrecke bzw. des die Vorformlinge durch die Heizstrecke führenden Transportorgans liegt, sondern die Vorformlinge von der Heizstrecke auf eine gesonderte Blasstrecke abgegeben werden, kann es zweckmäßig sein und die Übergabe vereinfachen, wenn die Vorformlinge nicht kontinuierlich die Heizstrecke durchlaufen, sondern durch sie durchgetaktet werden, wobei ein Takt, also eine Transportphase und eine Stillstandsphase jeweils z.B. etwa 0,2 sec betragen können. Dann kann die Übergabe von der Heizstrecke auf die Blasstrecke in einer, wenn auch kurzen Stillstandsphase zwischen den Takten erfolgen. Eine solche Reheat-Anlage, in der eine Heizstrecke abwechselnd auch zwei Blasstrecken bedienen kann, ist z.B. in der europäischen Patentanmeldung 96 119 356.2. beschrieben und dargestellt. Dabei werden jeweils mehrere Vorformlinge - bei dem beschriebenen und dargestellten Beispiel jeweils vier Vorformlinge - in einer Stillstandsphase der Heizstrecke von dieser auf eine Blasstrecke abgegeben. Eine solche Anlage ist ein Beispiel für die Anwendung der Vorformlingsladestation nach der Erfindung.

Die Erfindung ist an einem Ausführungsbeispiel und an Hand der Zeichnungen nachfolgend erläutert; es stellen dar:
- Fig. 1: die Zuführung der Vorformlinge mit dem Hals oder der Mündung nach oben, schematisch und in verkleinertem Maßstab,
- Fig. 2: das Antriebssystem der gesamten Ladestation nach der Erfindung, schematisch und in weiter verkleinertem Maßstab,
- Fig. 3A bis 3C: das System der Einführung der Vorformlinge in die Gefache eines zur erfindungsgemäßen Vorrichtung gehörenden Wenderades in aufeinander folgenden Phasen,

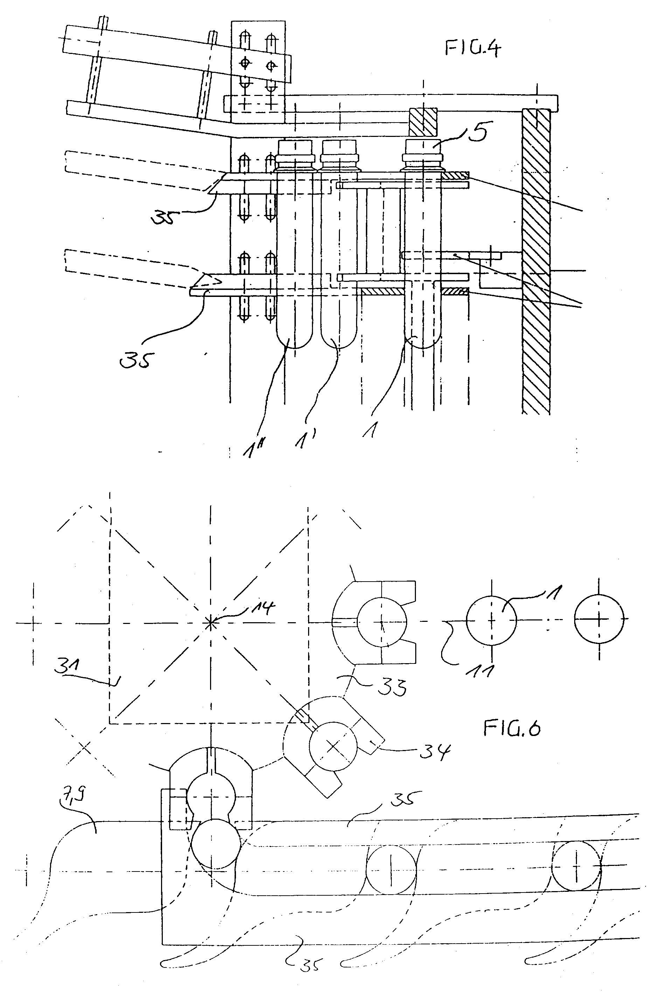

- Fig. 4: die Zuführung der Vorformlinge aus einem Sortierer zum Wenderad gemäß einem Ausführungsbeispiel in gering verkleinertem Maßstab,
- Fig. 5: das Aufdrücksystem und dessen Antrieb gemäß einem Ausführungsbeispiel im Maßstab der Fig. 4,

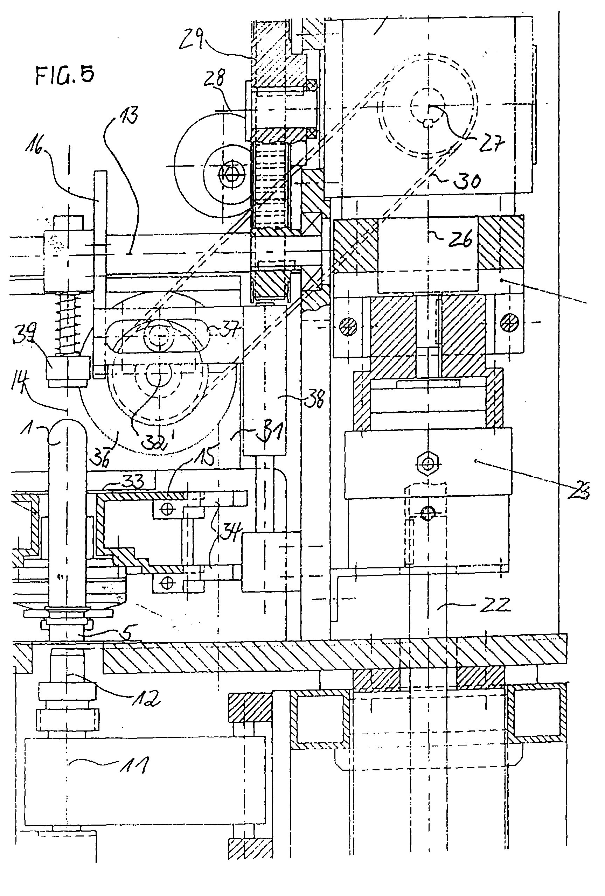

- Fig. 6: die Übergabe von einem Wenderad zu einem Laderad gemäß einem Ausführungsbeispiel im Maßstab der Fig. 4 und 5.

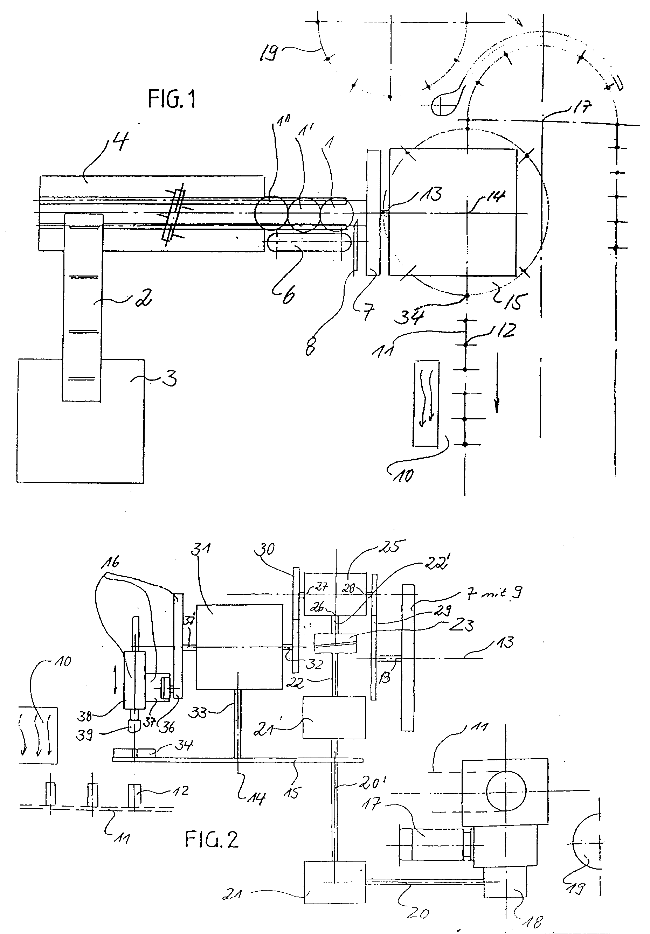

Nach Fig. 1 werden die Vorformlinge 1,1',1''... in an sich bekannter Weise über ein Stollensteigband 2 aus einem Vorratsbunker 3 über ein Rollensortiersystem 4 mit dem Hals 5 nach oben in hängender Form, d.h. mit der Mündung oben, an der Vorformlingsladestation angeliefert. In einem Endbereich des Rollensortiersystems 4 erfahren die Vorformlinge 1,1',1''... durch einen einseitig am Hals oder der Mündung 5 angreifenden Reibriemenantrieb 6 eine Vortriebskraft in Richtung der Zuführeinheit und hierbei vor allem gegen ein um eine horizontale Achse 13 drehendes Wenderad 7.

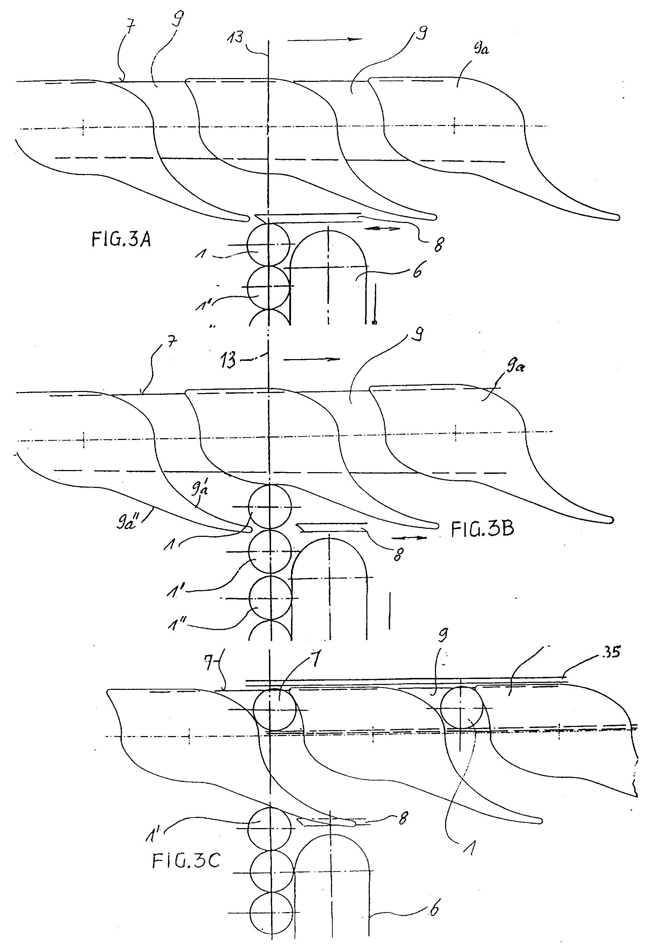

Mittels eines Zylinderstopsystems 8, das während des normalen Betriebs grundsätzlich in nicht stoppender Position steht, wird zum einen beim Anhalten der Produktion an der eigentlichen Blasanlage der weitere Zutransport von Vorformlingen unterbunden, jedoch im besonderen auch beim Start der Anlage dafür gesorgt, daß der Vorformlingszutransport zum Wenderad 7 zu einem bezogen auf die Vorformlingsgefache 9 (Fig. 3) exakten Zeitpunkt erfolgt. Da jedoch die Vorformlinge mit dem Hals nach unten auf die sie durch die Heizstrecke 10 taktenden, auf einer Transporteinrichtung, meist Kette 11, aufgesetzten Transportdorne 12 aufgesteckt werden, müssen sie zuerst um 180° gedreht werden, so daß die Mündung des Halses 5 in 6-Uhr-Position zeigt, wenn man die Position von dem Rollensortiersystem 4 zum Wenderad 7 mit den Vorformlingsgefachen 9 als 12-Uhr-Position bezeichnet. Dies geschieht durch kontinuierliches Drehen des Wenderades 7, wobei aus der 12-Uhr-Position zum Beispiel jeweils nach 30° ein Vorformling 1,1',1''... von den hierbei alle 30° angeordneten Vorformlingsgefachen 9 in die sogenannte 6-Uhr-Position mit dem Vorformlingshals 5 nach unten gedreht und danach an ein später beschriebenes, um eine vertikale Achse 14 taktendes Laderad 15 abgegeben wird, das die Vorformlinge 1,1', 1''... taktenderweise über die Transportdorne 12 der durch die Heizstrecke 10 taktenden Heizstreckenkette 11 schwenkt, um an dieser Stelle von einem ebenfalls später beschriebenen Aufdrücksystem 16 auf die Transportdorne 12 aufgedrückt werden zu können.

Das Wenderad 7 ist eine mit Gefachen 9, z.B. zwölf Gefachen für je einen Vorformling bestücktes Rad, wobei die Gefache von Kurvenblechen 9a begrenzt sind, die pflugscharähnlich derart geformt sind, daß sie mit ihrer Vorderkante 9a' in Drehrichtung einen Vorformling 1 in ein Gefache einschieben (Fig. 3B), während sie gleichzeitig mit ihrer Rückkante 9a'' das Einschieben des folgenden Vorformlings 1' in das gleiche Gefach blockieren und diesen in das folgende Fach weisen.

Mit 17 ist das Antriebssystem der Heizstreckenkette 11 der Reheat-Maschine bezeichnet, das auch die Übergabe der aufgeheizten Vorformlinge auf eine oder mehrere Blasstrecken 19 steuert. Bei dem dargestellten Beispiel der Erfindung erfolgt der Antrieb der Ladestation über dieses Antriebssystem 17 der Heizstreckenkette 11 über ein Abgreifgetriebe 18 der Übersetzung 1 : 1. Gemäß Fig. 2 sind über Wellen 20,20' an das Abgreifgetriebe 18 Umlenkgetriebe 21 der Übersetzung 1 : 1 angekoppelt, um die senkrecht stehende Welle 22 anzutreiben.

Am oberen Ende der Welle 22 ist eine Bremskupplungskombination 23 aufgesetzt, notwendig für die sicherheitstechnischen Anforderungen aus den einschlägigen Vorschriften sowie für eventuelle Störfälle. Die Kupplung innerhalb der Bremskupplungskombination 23 weist für je eine Umdrehung einen Einrastpunkt, z.B. eine in eine Ausnehmung einrastende, federbelastete Kugel, auf. Über diese Bremse innerhalb der Bremskupplungskombination wird die Verlängerung 22' der Welle 22, die getrennt von dieser über das Bremskupplungssystem mit letzterer verbunden ist, bei einem Neustart solange festgehalten, bis die Kupplung wieder an ihrem Einrastpunkt angelangt ist. Die Bremskupplungskombination 23 ist z.B. pneumatischer Art, sensorüberwacht, und kann im Störfall gezielt außer Eingriff gebracht werden. Oberhalb der Bremskupplungskombination 23 geht die Wellenverlängerung 22' in ein drei-achsiges Winkelgetriebe 25 mit folgenden Funktionen:
- Eingangswelle 26 identisch vorgenannter Wellenverlängerung,
- Welle 27 mit einer Übersetzung von 1:1 bezogen auf Eingangsachse 26,
- Welle 28 mit einer Untersetzung von 1:6 bezogen auf Eingangsachse 26.

Die Welle 28 treibt Über eine Untersetzung 29, z.B. eine Zahnriemen- oder Zahnraduntersetzung, von im Ausführungsfall 1:2 das um eine horizontale Achse 13 drehende Wenderad 7 an, während die Welle 27 eine im Ausführungsfall 1:1 betragende Zahnriemen- oder Zahnradübersetzung 30 antreibt, die auf eine durch ein Schrittschaltgetriebe 31 mit den Wellenenden 32 und 32' beidseits reichende Antriebswelle wirkt. Damit ist auch klar, daß sowohl die Zahnradriemen- oder Zahnraduntersetzung 29, die Zahnriemen- oder Zahnradübersetung 30 als auch die Achsenden 32 und 32' kontinuierlich rotieren. Auf dem Wellenende 32' ist das später im einzelnen beschriebene Aufdrücksystem 16 montiert.

Aus vorgenannten Übersetzungen des Abgreifgetriebes 18 für die Zuführeinheit von 1 : 1, den Umlenkgetrieben 21 von 1 : 1, der Welle 28 von 1 : 6 sowie der Zahnriemen- oder Zahnraduntersetzung 29 von 1 : 2 kann ersehen werden, daß bei einer Umdrehung der Welle 20 das Wenderad 7 auf seiner horizontal liegenden Welle mit der Achse 13 eine 1/12 Umdrehung macht, während die Welle 32, 32', bedingt durch die Übersetzung von 1 : 1 an der Welle 27 sowie der Zahnriemen- oder Zahnradübersetzung 30 mit einer Übersetzung von 1 : 1 eine volle Umdrehung durchführt. Rechtwinklig zur durchgehenden Welle 32,32' am Schrittschaltgetriebe 31 liegt in der Achse 14 des Laderades die Arbeitswelle 33. Das Schrittschaltgetriebe 31 ist als ein allgemein bekanntes, serienmäßig im Handel erhältliches Globoid-Kurvengetriebe aufgebaut derart, daß eine volle Umdrehung der Achse 32,32' eine 45°-Drehung der Arbeitswelle 33 plus einer Stillstandsphase kurvengeometrisch bedingter Zeit produziert. Das Schrittschaltgetriebe 31 ist so in das System eingebaut, daß die Arbeitswelle 33 vertikal nach unten zeigt, auf welcher das tellerradartige Laderad 15 aufgebracht ist, das in der bereits genannten Taktteilung von 45° federbelastete Zangenpaare 34 trägt, die in der Lage sind, Vorformlinge kraftschlüssig zu halten. In diesen Zangen werden die durch das Wenderad 7 um 180° gedrehten Vorformlinge 1 in der sog. 6-Uhr-Position in das an diesem Punkt korrospondierende Laderad 15 über ablauftechnisch optimierte, allgemein mit 35 bezeichnete, am System feststehende und nicht an den Rotationen beteiligte Leitbleche eingedrückt, von wo sie 45° taktenderweise über die Transportdorne 12 geschwenkt werden, um dann von dem auf der kontinuierlich rotierenden Welle 32' aufgebauten Aufdrücksystem 16 auf die Transportdorne 12 gedrückt zu werden.

Das Schrittschaltgetriebe 31 ist mit dem Antriebssystem 17 der Heizstreckenkette 11 der Reheat-Blasmaschine so justiert, daß immer dann, wenn die Kette 11, die auch die Transportdorne 12 trägt, sich in einer Stillstandsphase befindet, auch das Laderad 15 in einer Stillstandsphase steht, jedoch derart, daß wenn die Kette 11 zu einem neuen Takt startet, das Takten des Laderades 15 um so viel verzögert ist, daß die auf den Transportdornen 12 sitzenden Vorformlinge 1 aus den federbelasteten Zangenpaaren 34 ausgeklinkt werden können.

Wie bereits vorab beschrieben, weist das Schrittschaltgetriebe 31 eine kontinuierlich rotierende, durch das Getriebe durchgehende Antriebswelle 32,32' auf, wobei auf die Seite der Welle 32 die z.B. Zahnriemenübersetzung 30 wirkt, während auf der Seite der Welle 32' eine Exzenterscheibe 36 mit Kurvenrolle sitzt, die über eine Kulisse 37 (Fig. 5) einen vertikal auf- und abschiebbaren Schlitten 38 antreibt. Mit "Aufdrücksystem 16" wird eine stationär aufgebaute Einheit benannt, die den verschiebbaren Schlitten 38 mit eingearbeiteter Kulisse 37 trägt einschließlich der auf der Welle 32' befestigten Exzenterscheibe 36 sowie ein am Schlitten 38 angebrachter Stössel 39.

Der Schlitten 38 kann z.B., bedingt durch die geometrische Auslegung der Exzenterscheibe 36 und der Kulisse 37, einen Hub von insgesamt 50 mm machen. Während die Heizstreckenkette 11 mit den aufgebauten Transportdornen 12 und das Laderad 15 sich in einer Stillstandsphase befinden, durchläuft der Schlitten 38, gesteuert von der Exzenterscheibe 36 in Verbindung mit der Kulisse 37, von seiner Hubmitte aus einen Vertikalhub von 25 mm bis zum unteren Wendepunkt und dann wieder 25 mm von diesem Wendepunkt zur Hubmitte nach oben. Dabei wird ein Vorformling 1 durch ein in diesem Augenblick über dem Transportdorn 12 stehendes, federbelastetes Zangenpaar 34 hindurch mittels des am Schlitten 38 befestigten Stößels 39 auf den Transportdorn 12 gedrückt. Während die Heizstreckenkette 11 und das Laderad 15 danach in bereits vorab beschriebener zeitlicher Abstimmung weiter takten, durchläuft der Schlitten 38 von seiner Hubmitte aus den Weg 25 mm nach oben bis zum oberen Wendepunkt und wieder zurück bis zur Hubmitte, wo er bei einem neuerlichen Halt der Heizstreckenkette 11 und des Laderades 15 ankommt. Bedingt durch die vorab beschriebene Vorgehensweise kann dann der Stößel 39 beim linearen Abziehen der Vorformlinge 1 aus den federbelasteten Zangenpaaren 34 nicht mehr stören, weil er weit genug vertikal nach oben gefahren wurde.

Die Vorformlingsladestation läßt sich für einen sehr hohen Vorformlingsdurchsatz wie z.B. mehr als 9000 Stück pro Stunde auslegen. Aus diesem Grund läuft die Einheit vollautomatisch, also ohne zusätzliche Steuerungselemente ab. Die Vorformlinge werden bei ihrem Durchlauf durch die Einheit permanent unter Kraftschluß, d.h. Kontrolle gehalten. Da sich das Wenderad kontinuierlich dreht, werden die bereits orientiert angelieferten Vorformlinge nicht einer Brems-Beschleunigungsarbeit unterworfen. Die Vorformlinge werden vom Wenderad unter kontinuierlicher Kraft ins Laderad eingebracht und zwar praktisch ohne Verlust des Fixierungskontaktes. Das dem gegenüber taktende Laderad übernimmt die Vorformlinge vom kontinuierlich drehenden Wenderad in einer präzisen Ruhestellung und gibt die Vorformlinge in Ruhestellung präzise zur Heizstrecke ab. Dabei werden die Vorformlinge gezielt und präzise auf die Transportdorne der Heizstrecke aufgestossen.

### Bezugszeichenaufstellung

- 1: Vorformling
- 2: Stollensteigband
- 3: Vorratsbunker
- 4: Rollensortiersystem
- 5: Vorformlingshals
- 6: Reibriemenantrieb
- 7: Wenderad
- 8: Zylinderstopsystem
- 9: Vorformlingsgefache
- 9a: Kurvenbleche
- 10: Heizstrecke
- 11: Heizstreckenkette
- 12: Transportdorne
- 13: Wenderadachse
- 14: Laderadachse
- 15: Laderad
- 16: Aufdrücksystem
- 17: Antriebsystem Heizstreckenkette
- 18: Abgreifgetriebe für die Zuführeinheit
- 19: Blasstrecke der Reheat-Maschine
- 20: Wellen
- 21: Umlenkgetriebe
- 22: Senkrecht stehende Wellen
- 23: Bremskupplungskombination
- 25: Dreiachsiges Winkelgetriebe
- 26: Eingangswelle
- 27: Winkelgetriebewelle
- 28: Winkelgetriebewelle
- 29: Untersetzung Wenderad
- 30: Übersetzung Schrittschaltgetriebe
- 31: Schrittschaltgetriebe
- 32, 32': Durchgehende Antriebswelle Schrittschaltgetriebe
- 33: Arbeitswelle Schrittschaltgetriebe
- 34: Federbelastete Zangenpaare
- 35: feststehende Leitbleche
- 36: Exzenterscheibe mit Kurvenrolle
- 37: Kulisse
- 38: Schlitten
- 39: Stößel

## Patentansprüche

1. Vorformlingsladestation für Reheat-Blasmaschinen, mit denen einem Vorrat mit dem Boden unten entnommene hülsen- oder patronenförmige Vorformlinge (1) auf die Transportdorne (12) einer kontinuierlich taktweise bewegten Transporteinrichtung, z.B. Kette (11), aufgesteckt werden, die die Vorformlinge auf den Dornen mit dem Boden nach oben durch mindestens eine Heizstrecke (10) führt, von der sie nach Erreichen ausreichender Verformungstemperatur abgenommen und in mindestens eine Blasform eingeführt werden, wobei der Antrieb der Transporteinrichtung durch ein Schrittschaltgetriebesystem (17) für die Erzeugung von Bewegungs- und Stillstandsphasen erfolgt, dadurch **gekennzeichnet,** daß sie ein die Vorformlinge aus einer Position "Boden unten" in eine Position "Boden oben" kontinuierlich drehendes Wenderad (7) mit waagerechter Achse (13) und ein die Vorformlinge von diesem abnehmendes taktweise drehendes Laderad (15) mit senkrechter Achse (14) aufweist, aus dem die Vorformlinge auf die Transportdorne (12) durch ein Aufdrücksystem (16) aufgesteckt werden, wobei das Aufstecken in einer Stillstandsphase der Transporteinrichtung bei gleichzeitigem Stillstand des Laderades erfolgt.

2. Ladestation nach dem Anspruch 1, dadurch **gekennzeichnet,** daß der Antrieb der Ladestation mit der permanent rotierenden Antriebswelle des Schrittschaltgetriebes der Transporteinrichtung (17) der Reheat-Maschine verbunden ist.

3. Ladestation nach den Ansprüchen 1 und 2, dadurch **gekennzeichnet,** daß die Verbindung des Schrittschaltgetriebes (17) der Transporteinrichtung mit dem Antrieb der Ladestation über ein Abgreifgetriebe (18) und ein Unlenkgetriebe (21) erfolgt, das über eine senkrechte Welle (22) ein dreiachsiges Winkelgetriebe (25) antreibt, das über eine im rechten Winkel zur Welle (22) verlaufende Welle (28) und eine Rotationsverbindung (29) das Wenderad (7) und über eine Welle (27) sowie eine Rotationsverbindung (30) ein Schrittschaltgetriebe (31) treibt, von dem rechtwinklig zur Welle (28) das Laderad (15) angetrieben wird.

4. Ladestation nach den Ansprüchen 1 bis 3, dadurch **gekennzeichnet,** daß der Antrieb ein Schrittschaltgetriebe (31) mit durchgehender Welle rechtwinklig zur Welle des Laderades (15) aufweist, deren eines Ende (32) einen Teil, z.B. Zahnrad oder Riemenrad, der Rotationsverbindung (30) und deren entgegengesetztes Ende (32') ein Vorformlingsaufdrücksystem (16) treibt.

5. Ladestation nach den Ansprüchen 1 bis 4, dadurch **gekennzeichnet,** daß die Welle (27) des Winkelgetriebes (25) mit der gleichen Umdrehungszahl wie die Eingangswelle (26) umläuft, während die Welle (28) mit geringerer Umdrehungszahl als die Eingangswelle umläuft und daß die Verbindung zwischen dem Winkelgetriebe und dem Wenderad (7) eine Untersetzung (29), die zwischen dem Winkelgetriebe (25) und dem Laderad (15) dagegen eine Übersetzung (1 : 1) ist.

6. Ladestation nach den Ansprüchen 1 bis 5, dadurch **gekennzeichnet,** daß das Schrittschaltgetriebe (31) bei einer vollen Umdrehung der durchgehenden Welle (32,32') eine wesentlich geringere Winkeldrehung (z.B. 45°) der Laderadwelle (33) nebst zusätzlicher Stillstandsphase erzeugt.

7. Ladestation nach dem Anspruch 1, dadurch **gekennzeichnet,** daß das Laderad (15) die Vorformlinge kraftschlüssig haltende Zangenpaare (34) trägt, in die die vom Wenderad (7) gehaltenen, von der Stellung "Boden nach unten" in die Stellung "Boden nach oben" gedrehten Vorformling eingedrückt und nacheinander über die Transportdorne (12) geschwenkt werden.

8. Ladestation nach den Ansprüchen 1 bis 7, dadurch **gekennzeichnet,** daß das auf einem Ende (32) der durchgehenden Welle (32,32') des Schrittschaltgetriebes (31) montierte Aufdrücksystem (16) einen Stößel (39) aufweist, der die Vorformlinge taktweise auf die Transportdorne aufdrückt.

9. Ladestation nach den Ansprüchen 1 und 8, dadurch **gekennzeichnet,** daß das Aufdrücksystem (16) aus einem von der Antriebswelle (32') des Schrittschaltgetriebes (31) angetriebenen Exzenterscheibe (36) mit Kurvenrolle besteht, die über eine Kulisse (37) einen heb- und senkbaren Schlitten (38) antreibt, der den die Vorformlinge auf die Transportdorne (12) aufdrückenden Stößel (39) trägt.

10. Ladestation nach dem Anspruch 9, dadurch **gekennzeichnet,** daß die Exzenterscheibe (36) und die Kulisse (37) geometrisch so ausgelegt sind, daß der Schlitten (38) von der Hubmitte aus einen Vertikalhub nach unten fährt und während dieser Zeit durch ein über einem Transportdorn stehendes Zangenpaar (34) hindurch mit dem Stößel (39) einen Vorformling auf den Transportdorn drückt, wonach der Schlitten den gleichen Weg aufwärts bis zur Hubmitte und darüberhinaus über diese den gleichen Weg weiter aufwärts bis zum oberen Wendepunkt und danach zurück zur Hubmitte fährt und dort in dem Augenblick ankommt, in dem die Transporteinrichtung und das Laderad (15) in ihrer Stillstandsphase stehen.

11. Ladestation nach den Ansprüchen 1 bis 10, **gekennzeichnet** durch eine Kopplung des Schrittschaltgetriebes (31) mit dem Antriebsystem (17) der Transporteinrichtung, daß bei jedem Beginn einer Bewegungsphase der Transporteinrichtung der Beginn der Drehphase des Laderades (15) um so viel verzögert wird, daß ein auf einem Transportdorn (12) sitzender Vorformling (1) aus dem Zangenpaar (34) ausgeklinkt werden kann.

12. Ladestation nach dem Anspruch 1, dadurch **gekennzeichnet,** daß das Wenderad (7) mit Gefachen (9) für je einen Vorformling bestückt ist, die von Kurvenblechen (9a) begrenzt sind, die pflugscharähnlich derart geformt sind, daß sie mit ihrer Vorderkante (9a') in Drehrichtung des Rades einen Vorformling (1) in ein Gefache einschieben, während sie gleichzeitig mit ihrer Rückenkante (9a'') das Einschieben eines folgenden Vorformlings (1') in das gleiche Gefache blockieren und diesen in das folgende Fach weisen.
